# EUROPEAN PATENT APPLICATION

(11) **EP 0 871 117 A1**
(43) Date of publication of application: **14.10.1998**
(21) Application number: 97909694.8
(22) Date of filing: 30.10.1997
(51) Int. Cl.: G06F 9/46

(54) **INFORMATION PROCESSING SYSTEM AND INFORMATION PROCESSING METHOD**

(30) Priority: 31.10.1996 JP 306994/96
(71) Applicant: SONY CORPORATION, Tokyo 141 (JP)
(72) Inventor: NAGANO, Susumu, Shinagawa-ku, Tokyo 141 (JP); SAGANE, Tomonari, Shinagawa-ku, Tokyo 141 (JP); SATO, Yoshimi, Shinagawa-ku, Tokyo 141 (JP); FUJISHIRO, Toshihiko, Shinagawa-ku, Tokyo 141 (JP)
(74) Representative: Melzer, Wolfgang, Dipl.-Ing.
(86) International application number: JP9703951
(87) International publication number: WO9819236

(57) **Abstract**

In a information processing system and a information processing method, an object packed with a data area and a process area is provided in a memory area by an object manager as occasion requires and moreover, information interchanging between the respective objects is controlled by interfaces having the common stated procedure, so that an information processing can be performed in an object-by-object basis.

## Description

### Technical Field

The present invention relates to an information processing system and an information processing method, and applicable to, for instance, an information processing system and an information processing method for processing information on the process from program development until program execution.

### Background Art

Heretofore, there has been the so-called object directional programming based on such a concept that "things" and "notions" which exist in the actual world are designated as objects, and those are abstracted in accordance with the hierarchical structure and modeled in a natural form hereby, on the solution of the problem by the information processing programming.

Here, the formed model is a programming, and so it may be not translated into the form of a procedure, at the time of programming.

In the object directional programming, an individual concrete thing is designated as an instance, and its suitable aggregation to which a name has been given is designated as a class.

A procedure or an operation which is common to all of a certain class is designated as a method, and it is described in the class. A method which has been written here do not perform any operation by itself, and, when a message is passed specifying an object, the corresponding method is searched and some processing is executed.

The feature of the object directional programming is that the needed method is searched and then the processing is executed, on the basis of the message and the object, in this way.

By the way, a program is usually executed by the use of input/output devices (hardware resources), such as a CPU, a memory, and an external storage device. That is, the operating system reads the instruction set from the program which has been loaded in the memory, and processes it by the use of the CPU, so as to execute the program.

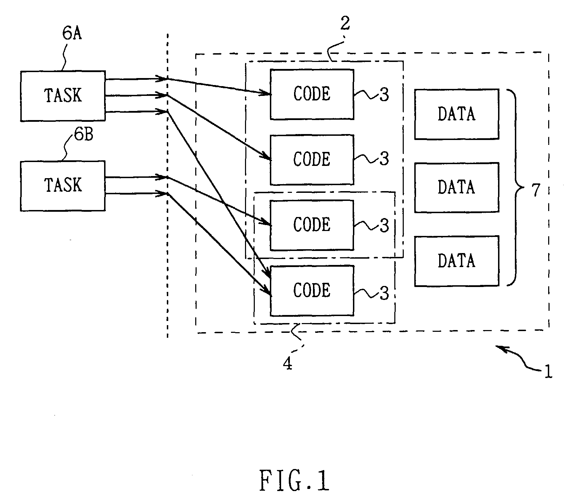

As shown in Fig. 1, in an operating system 1, respective tasks 6A and 6B execute the operation processing by the use of codes 3 and data 7 under the control of the CPU, in such a state that, for instance, the codes 3 for controlling a semaphore 2 and the codes 3 for controlling a memory 4 exist without a boundary.

At the time of processor execution, the CPU allocates insurance and employment of the hardware resources by a task (or a process) which is the fundamental unit of CPU allocation. Such method of program execution is similar to that of the program which is heretofore called as object directional.

As a result, even though the programming is formed with consciousness to the object by the use of an object directional language at the time of programming, processing of the CPU is executed on a task-by-task basis in fact, so that each object is not recognized by the system and treated as a function in the task. Therefore, there has been a problem that a system analysis, program planning, and a program development are impossible which employ only objects within also the dynamic behavior at the time of program execution.

Besides, there has been such a problem that, when a message is to be sent to an object which resides in the other task, it is impossible, or, as to the message sending procedure, massage exchanging among objects is impossible unless a message having a different procedure is employed from that of the case of sending to the object which resides in the same task.

### Disclosure of the Invention

Considering aforementioned respects, this invention proposes an information processing system and an information processing method wherein the processing unit of program is an object, and modeling can be performed by the objects consistently from system analysis to information processing of the time of program development and program execution.

To solve such problems, the present invention provides an information processing system for controlling the processing functions which are the executable units of the information processing and executing the stated information processing, the system comprises an object manager which allocates the process areas for the processing functions in the storage means, generates the objects having the data areas which are corresponding to the process areas of the processing functions within the independent area in the storage means as the executable units of the information processing when necessary, controls information interchanging among the plural objects by means of the interfaces having the stated procedure which is common to the objects, and executes each of the objects.

By this, an object having an independent data area can be generated in the storage means when necessary, and information exchanging among the plural objects can be controlled with the interface having the stated procedure which is common to the objects, so that the information processing can be executed on an object-by-object basis.

Besides, the present invention provides an information processing method for controlling the processing functions which are the executable units of the information processing and executing the stated information processing, the method comprises an object generating step of allocating the process areas for the processing functions in the storage areas, and generating the objects having the data areas which are corresponding to the process areas within the independent area in the storage area as the executable units of the information processing when necessary, and an object executing step of performing information interchanging by means of the interfaces having the stated procedure which is common to the generated plural objects, and executing the objects.

By this, the object having the independent data area can be generated in the independent storage area when necessary, and information interchanging is performed with the interface having the stated procedure which is common to the objects, so that information processing can be executed on an object-by-object basis.

### Brief Description of Drawings

Fig. 1 is a schematic diagram explaining the conventional operating system.

Fig. 2 is a schematic diagram illustrating a whole configuration of the information processing system.

Fig. 3 is a schematic diagram illustrating a configuration of the objects.

Fig. 4 is a schematic diagram illustrating transmission and reception of the message and the reply.

Fig. 5 is a block diagram illustrating the class management block and the object management block.

Fig. 6 is a state transition diagram explaining a state transition of the object.

Fig. 7 is a flow chart illustrating first execution procedure of the object.

Fig. 8 is a state transition diagram illustrating the transition state of the object.

Fig. 9 is a flow chart illustrating second execution procedure of the object.

Fig. 10 is a state transition diagram illustrating the transition state of the object.

### Best Mode for Carrying Out the Invention

An embodiment of the present invention will be described in detail hereinafter with reference to the drawings.

### (1) Whole Configuration of the Information Processing System

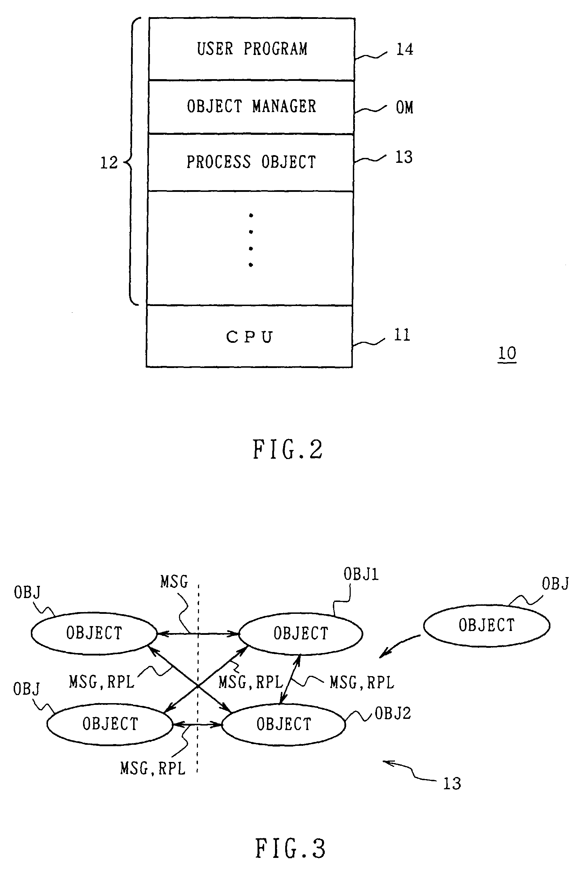

In Fig. 2, reference numeral 10 shows, as a whole, an information processing system wherein the concept of information processing has been modeled with the object, and, according to the entity, the CPU 11 treats it as a message, and allocates the execution right of the process object 13 which is the executable unit of information processing to the CPU 11 by the use of the object manager OM which resides on the memory 12, the storage means, so that the stated information processing is executed toward the user program 14.

### (1-1) Configuration of Object

As shown in Fig. 3, an information processing system 10 is comprised of objects OBJ which are the stated processing functions and the processing functions having the stack areas and the internal variable areas in the independent memory area. The object OBJ is the fundamental unit of CPU scheduling, and, at least the object manager OM for object managing is included in the object OBJ of the information processing system 10.

Each object OBJ has one or more methods (functions) which are actuated by receiving the message MSG which is the interface, and, for instance, when the object OBJ2 which is waiting a message MSG has received the message MSG sent from the object OBJ1, the specific method of the object OBJ2 to which the control has been transferred by the message MSG is executed. The object OBJ2 which has completed a series of processing based on the method goes to the message-waiting state, again.

In this way, the objects OBJ are able to mutually interchange the information only via the interface, that is the message MSG, and able to mutually execute the cooperative work hereby.

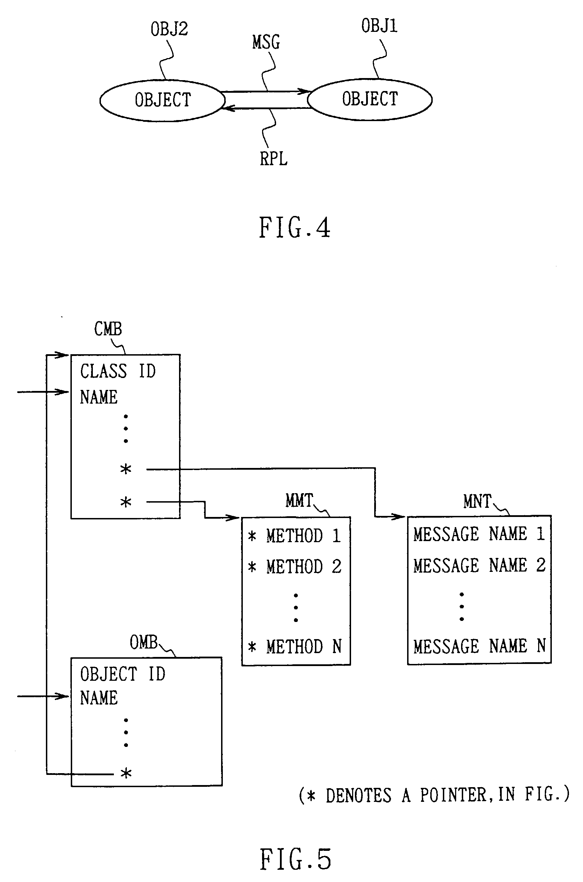

That is, as shown in Fig. 4, in this information processing system 10, when the object OBJ1 has sent the message MSG, it receives a reply RPL from the object OBJ2 which has received the message MSG, as a response to the received message MSG, such that the message MSG and the reply RPL surely form a pair.

In this information processing system 10, the size of the internal variable of the object OBJ, the correspondence relationship of the message MSG and the method, and the information which is shared with the object OBJ, such as the codes of the method, are set as classes, and the objects OBJ are generated such that the classes are treated as the types.

In this information processing system 10, it is able to freely define a class with the class-defining function, and also it is able to newly define a specialized subclass, causing it to inherit a type from the basic generalized-classes (super-classes) which have been previously set. Therefore, it is able to shorten the program development time by means of the object, and it is able to reduce the code quantity which is used for object definition.

### (1-2) Object Manager

The object manager OM performs management of the classes which are defined in the information processing system 10, and performs management of the object OBJ which is working at present on the operating system of the information processing system 10, such as generation and extinction of the object OBJ in the memory 12, in Fig. 1 and Fig. 2, for example.

Besides, the object manager OM manages transmission/reception of the message MSG and the reply RPL which are the interfaces which are to be interchanged among the objects OBJ.

Moreover, the object manager OM ranks the plural objects OBJ in accordance with their states, and allocates the CPU to each object OBJ in accordance with the priority.

Furthermore, the object manager OM manages time which is shared by all objects OBJ, and offers time-out and alarm service of message transmission/reception.

### (1-3) Generation of Object and Initializer

In the case of generating an object OBJ, the information processing system 10 firstly sends a define·message MSG to the object manager OM, so as to define the class which is the type of the object OBJ. Next, it sends a create·message MSG to the object manager ON, so as to generate the object OBJ.

As shown in Fig. 5, the object manager OM prepares a class management block CMB area in the memory, in accordance with the define-message MSG to newly define a class 1 newly which is issued from the user program, and then stores the class information needed for managing the class, such as the size of the internal variable, the number of messages, and the address of the method. Next, in accordance with the create·message MSG to create an object OBJ according to the class, the object manager OM generates an object OBJ which is an instance of the class.

The object manager OM actually allocates the process area according to the processing function to the object OBJ in accordance with the information in the class management block CMB, and secures the stack area and the internal variable area in the memory, so as to set the environment in which the object OBJ can receive the message MSG and can work. At the same time, the object manager OM constructs a structure called the object management block OMB, and then stores the information particular to an object which is needed for managing the object, such as the stack size, the priority, and the class to which it belongs, into the object management block OMB.

The data (management resource) to be stored in the class management block CMB are the class ID (Identification), the class name, the pointer to the class management block CMB of the super-class, the pointer to the initializer, the number of the belonging objects, the number of the derived sub-classes, the size of the internal variable area, the size of the default stack, the number of the messages, the pointer to the method list, and the pointer to the message list.

In this case, when the class has been already defined, the object OBJ is generated by delivering the create·message MSG to the object manager OM.

The information processing system 10 is adapted to make the class and the object OBJ dynamically defined or undefined when necessary; in this case, the number of classes and the number of objects which can be defined in the system may be elected without any restriction, within the range which is allowed by the memory capacity.

In order to change the defined object OBJ into execution-start state actually and correctly, the object manager OM activates the initialization function called an initializer to correctly initialize the internal variable of the object OBJ, at the time of reception of the create·message MSG.

The initializer is common to the objects OBJ generated in the identical class, and its information is indicated to the object manager OM as the class information, at the time of class definition.

In this way, any number of objects OBJ can be generated from one class, so long as the hardware resources allow. Besides, any number of classes can be defined, within the limitation of the memory capacity.

### (1-4) Deletion of Object

By sending a delete·message MSG to the object manager OM, the object OBJ is deleted.

Under receiving the delete·message MSG, the object manager OM deletes the object management block OMB at first, and at the same time, releases the stack area and the internal variable area which have been allocated to the object OBJ in the memory.

Besides, it causes to execute a postprocessing particular to the class, such as resetting of the global variable, by means of the postprocessing function called a sweeper.

### (1-5) Identification of Object

As described above, the object manager OM allocates an "object ID" for uniquely identifying an object at the time of generation of the object. Thereafter, operations which are related to this object, such as transmission of the message, are executed by specifying the object ID. In other words, the object can be mutually identified by the object ID.

Besides, each object can be also identified, by setting the individual name for the individual object OBJ by the object manager OM, at the time of generation of the object.

### (1-6) Identification of Message

In the information processing system 10, a message is recognized by two concepts of "message name" and "message number".

The massage name is set as a letter string of, for instance, 8 letters (8 bytes). That is, the object manager OM registers message names which can be received by the object, in the form of a message name table (MNT) which is a list of the message names, at the time of definition of the class to which each object belongs.

On the other hand, the message number is a numeral of 0 or above which is allocated to each message; in concrete, it corresponds to a subscript of a message method table (MMT) which is a list of the methods (the function pointers), and it is defined indirectly by the class developer by defining the MMT. When an object transmits a message, a message MSG, that is a method, is specified by specifying the message number.

In this case, it is able to select whether the message is transmitted by the use of the message name through the operation which adapts to the human thought, or the message is transmitted by the use of the message number so that the message processing time is shortened in such a case where there is a strict requirement in the processing time needed for message transmission.

### (1-7) Identification of Class

In the case of managing the classes, the object manager OM dynamically allocates a class ID to each class, and thereafter, has access to the class information using the class ID. Besides, a name of, for instance, 4 letters is attached to a class too, and the class ID can be retrieved from this name.

### (1-8) State Transition of Object

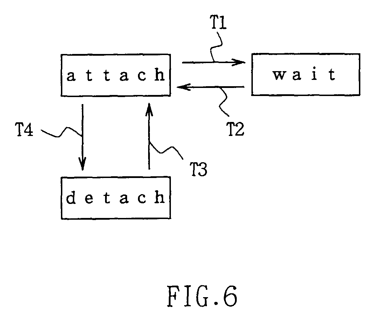

As shown in Fig. 6, as the states of the object OBJ, there are three basic transition states; the first is "attach", which is an execution state for executing a method corresponding to the received message, and which is not a state of reply waiting attendant upon the message transmission; the second is "wait", which is a standby state for waiting a reply of the transmitted message; the third is "detach", which is an execution standby state following to termination of a method and preceding to processing of a message.

That is, an object OBJ1 of the "attach" state transfers from the "attach" state to the "wait" state (T1), when it has transmitted a message MSG to the other object OBJ2. Besides, when a reply RPL has been sent back with respect to the previously transmitted message MSG, the object OBJ1 of the "wait" state transfers to the "attach" state (T2). Besides, if the object OBJ2 has received a message in such a state that it is doing nothing, and the corresponding method has been activated, then the object OBJ2 transfers from the "detach" state to the "attach" state (T3). Moreover, if the method has been activated for the stated processing to the received message MSG, the object OBJ2 which has received the message MSG transfers from the "attach" state to the "detach" state (T4), after termination of the method.

### (1-9) Allocation of CPU

In this information processing system 10, CPU allocation (object scheduling) to the objects OBJ is performed by the object manager OM.

In this case, objects of the "attach" state become the subject of scheduling. Therefore, in the objects of the "attach" state, there are one object of the "run" state to which the CPU has been allocated and which is acting actually, and zero or more objects of the "ready" state which can operate but to which the CPU have been not allocated and which is not acting actually.

The object manager OM allocates the CPU to the highest priority of the object, out of the objects of the "attach" state which have been arranged in the descending order of priority and scheduled.

That is, each object is managed such that the CPU is not allocated to it until all of the higher-priority objects of the "attach" state disappear.

The priority of an object is set when the object is generated, but it can be changed by controlling of the object manager OM at an arbitrary time, even after generation of the object.

When an object transfers from the "attach" state to the "detach" or the "wait" state, the object manager OM take the CPU from the object to precludes the object from the subject of scheduling.

At present, in the case where an object transfers the other state to the "attach" state, including the case where an object OBJ of the "attach" state has been precluded from the CPU allocation for some reason but it still remains in the "attach" state, the object is arranged, by the object manager OM, on the tail of the CPU queue of the objects OBJ which have the same priority as that of itself.

### (2) Operation of the Information Processing System

### (2-1) Generation of Object

According to the above configuration, in the case of generating the object OBJ, the information processing system 10 first delivers a define·message MSG to the object manager OM, so as to prepare a class management block CMB. And then it stores the class information in the class management block CMB, and defines the class CLS which is the type of the object OBJ.

Next, when the object generation based on the create·message MSG has been requested toward the object manager OM, generation of the object OBJ is commenced.

That is, the object manager OM sets an object management block OMB in the memory 12 in accordance with the information in the class management block CMB, so as to store information particular to the object, such as the stack size, the priority, and the class to which it belongs. In this way, the environment is set in which the object OBJ can receive the message MSG to operate.

Next, the object manager OM allocates the process area which adapts to the stated processing function, in accordance with the information in the class management block CMB, and ensures the stack area and the internal variable area in the memory 12 actually.

Besides, the object manager OM initializes the internal variable in the object OBJ by means of the initializer. In this way, the object OBJ is generated.

At this time, the object manager OM sets the object OBJ to the "detach" state.

The operating system OS can dynamically define the class CLS and the object OBJ as occasion requires. Besides, the number of classes and the number of the objects which can be defined in the system may be elected without any restriction, within the range which is allowed by the memory capacity. Therefore, the functions of the system can be expanded, only by adding an object having the stated processing function to the information processing system newly.

### (2-2) Execution of Object

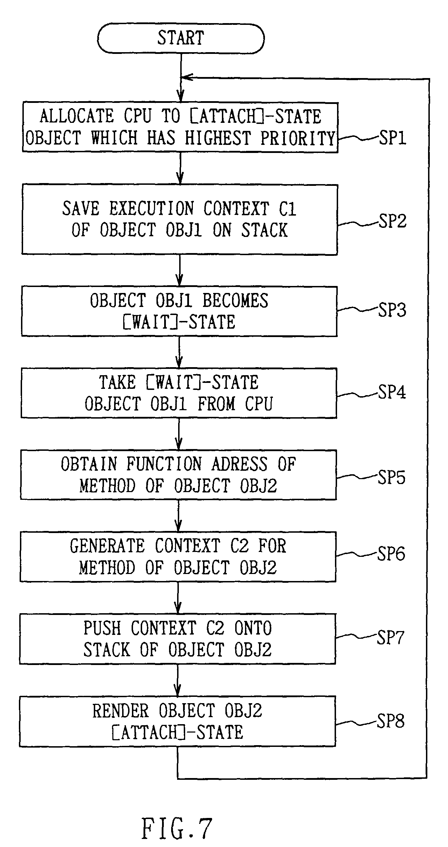

The object manager OM executes the objects in accordance with a first execution procedure shown in Fig. 7. When the first execution procedure is commenced, at step SP1, the object manager OM first selects the object OBJ which has the highest priority in the "attach" state (in this case, the object OBJ1) out of the plural objects OBJ generated in the information processing system, and allocates the CPU to it.

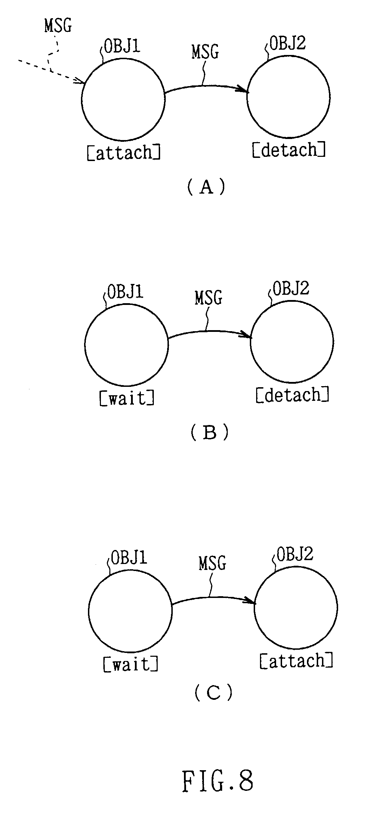

Next, at step SP2, when the object OBJ1 has sent a message, the object manager OM saves the execution context C1 such as the current register value of the object OBJ1 which has sent the message MSG, on a stack (Fig. 8(A)).

The control has moved to the object manager OM in this way; a result, at step SP3, the object OBJ1 is transferred to the "wait" state (Fig. 8(B)).

When the object OBJ1 has sent a message MSG to the other object OBJ2 using the function SendMessage() in the information processing system 10, a software interruption occurs, and the object manager OM can obtain the control.

Next, at step SP4, when the object manager OM has determined that the object OBJ1 has transferred from the "attach" state to the "wait" state, the transferred object OBJ1 is taken from the CPU and is removed from the subject of scheduling. At this point, the object OBJ1 becomes a state of waiting the reply of the message MSG (block state).

Next, at step SP5, the object manager OM which has obtained the control searches the object manager block OMB of the object OBJ2 of the message MSG receiving side, obtains the class CLS to which it belongs therefrom, and then obtains the function address of the method corresponding to the message MSG sent from the class manager block CMB of the very class CLS.

Next, at step SP6, the object manager OM generates the context C2 for the method of the activated object OBJ2. Then, at following step SP7, it pushes the context C2 onto the stack of the object OBJ2.

Then, at the following step SP8, the object OBJ2 becomes the "attach" state (Fig. 8(C)). The context C2 which has been pushed onto the stack includes the start address with respect to the message MSG, the content of the argument of the message MSG, the return address which generates a software interruption for causing the control to return to the object manager OM at the time of termination of the method, etc.

Subsequently, the execution procedure of the object returns to step SP1, so as to give the execution right of the CPU to the object OBJ which has the highest priority out of the objects OBJ which are currently staying in the "attach" state.

On the other hand, the reply RPL sent from the side of the object OBJ2 which has received the message MSG is having a relationship of one-to-one correspondence with the message MSG, and executed by the use of the function of SendReply().

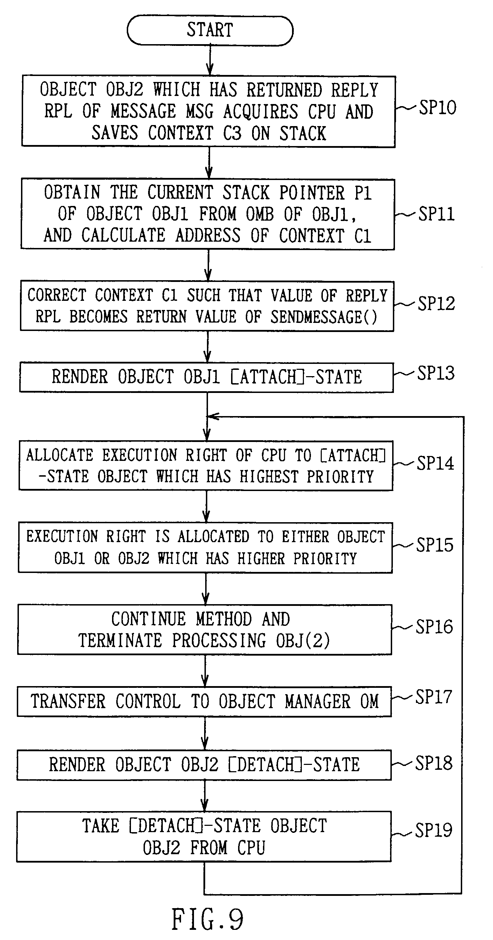

In the information processing system 10, when transmission of the reply RPL has been executed, a software interruption occurs and the object manager OM can obtain the control. At this time, the object manager OM controls the procedure for sending the reply RPL with respect to the message MSG reception among the objects OBJ, in accordance with a second execution procedure of the object shown in Fig. 9.

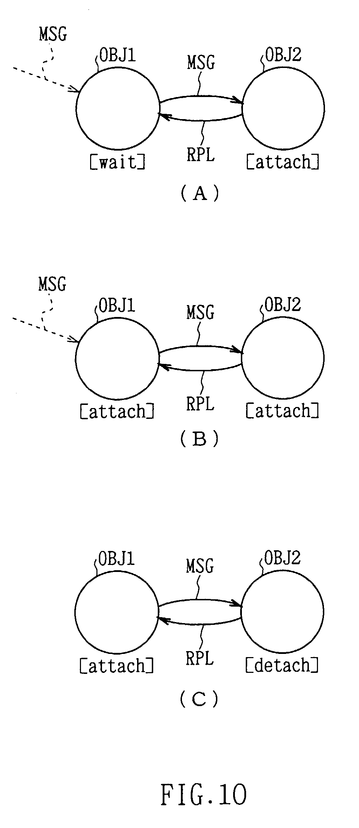

That is, firstly, at step SP10 of the second execution procedure of the object, the object manager OM saves the context C3 of the object OBJ2 which has returned the reply RPL on the stack of the object OBJ2 (Fig. 10(A)).

Next, at step SP11, the object manager OM detects the current stack pointer P1 of the object OBJ1, and the address in the stack of the saved context C1, from the object manager block OMB of the object OBJ1 which has sent the message MSG.

At the following step SP12, the object manager OM corrects the context C1 such that the value which has been returned by the reply RPL becomes the return value of the SendMessage() function, and, at the same time, at the following step SP13, it causes the object OBJ1 to go to the "attach" state (Fig. 10(B)).

At the following step SP14, the object manager OM gives the execution right of the CPU to the object OBJ which has the highest priority out of what are staying in the "attach" state currently.

At this time, both of the object OBJ1 and the object OBJ2 are staying in the "attach" state. So, when the execution right of the CPU has been allocated to that which has the higher priority out of the object OBJ1 and the object OBJ2 at the following step SP15 (in this case, it is supposed that the object OBJ2 has the higher priority), the method of the object OBJ2 is continued and the processing is terminated at the following step SP16.

As a result, when the object OBJ2 has terminated the method, a jump occurs to the return address which has been pushed in the stack of the object OBJ2 at the time of reception of the message MSG, at the following step SP17; as a result, a software interruption occurs and the control is transferred to the object manager OM.

The object manager OM sets the object OBJ2 to the "detach" state at the following step SP18 (Fig. 10(C)), and then takes the object OBJ2 of the "detach" state from the CPU at step SP19, and returns to step SP14. Subsequently, the execution right of the CPU is allocated toward the objects OBJ of the "attach" state in accordance with a descending order of the priorities, and the processing in accordance with the second execution procedure of the object is executed continuously.

In this way, in the information processing system 10, the object manager OM supplies the class and the object functions and replies transmission of a message MSG and a reply RPL between objects, thereby a program can be executed in an object-by-object basis.

Therefore, a system which has been modeled on the basis of objects can be treated consistently from the program design to the development, by means of objects which suit the human sense.

Besides, at the time of program execution based on each object, access to each object is performed by the use of the message function and the reply function, therefore, the program can be executed by a procedure which is simple and common to the respective objects OBJ.

According to the above configuration, since the information processing system 10 is constructed such that an object OBJ which has been generated as the executable unit of the CPU is provided in the independent memory area in the memory, the function of the information processing system 10 can be easily extended, by merely generating the object OBJ having the desired processing function dynamically as occasion requires by the use of the object manager OM.

Besides, according to the above embodiment, in the case where the execution right of the CPU is allocated from the first object OBJ1 to the second object OBJ2 and the object is executed, the method of the object OBJ2 is activated with the message MSG to be sent from the object OBJ1 as a trigger, therefore, the respective objects OBJ1 and OBJ2 can be treated consistently as objects called messages MSG which are mutually independent with the exception of the interface, and each program can be executed in an object-by-object basis.

Besides, in this case, the communication procedure among objects OBJ is executed by transmission of a message MSG and a reply RPL, therefore, objects can be executed among all objects with a common and simple procedure.

By this, the concept of information processing modeled by the object can be consistently modeled from analysis of the information processing system to program development and program execution, thus it is able to realize an information processing system and an information processing method which suit the human sense and are easy to understand.

Besides, in the case where the object directional technique is reflected in the program according to the above embodiment, it does not require the use of a special programming language for utilizing the object directional technique. That is, the present invention can be realized by the use of a programming language, in which the object directional technique is reflected, such as C language or C++ which is the extended C language. By such the language non-extension of language, the training time for users can be shortened.

In this connection, the object acts dynamically similar to the process of the operating system and the task. However, the object has difference from the process and the task in that the object has one or more method (function) which is activated by reception of a message and the objects communicate with each other by means of messages. This is represented by the following expression (1) in the C language, and the execution image becomes the object.

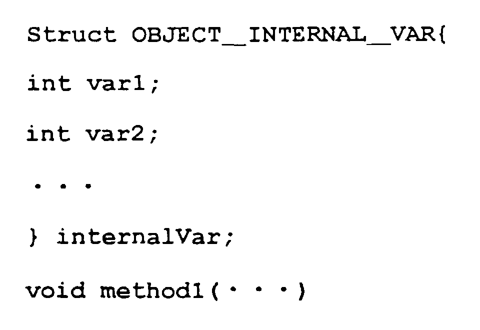

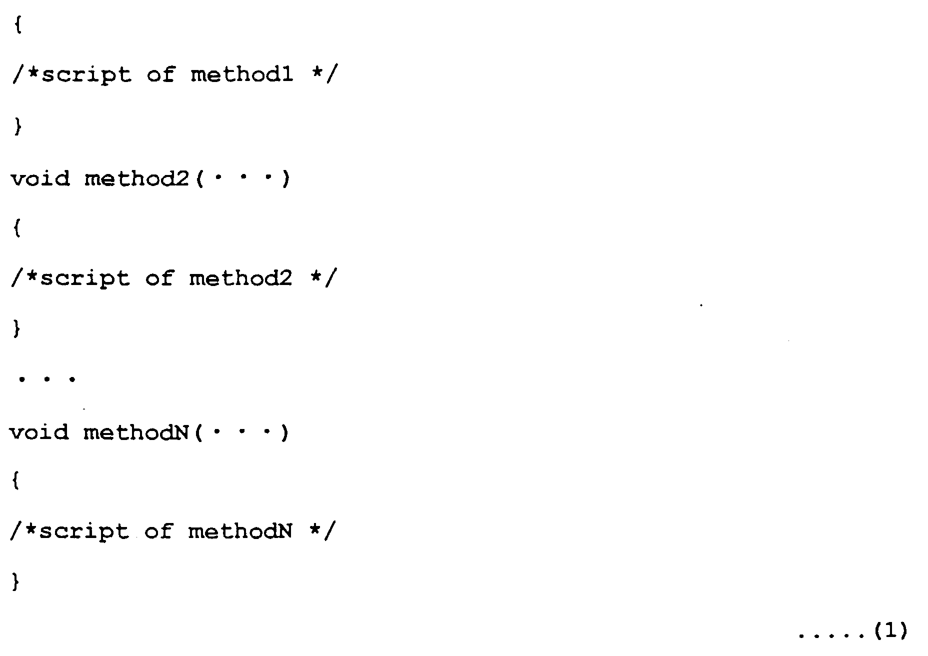

Note that, in the above embodiment, such a case has been described that the communication procedure between the object OBJ1 and the object OBJ2 has been executed by transmitting the message MSG and the reply RPL through the object manager OM, however we do not intend to limit the present invention to this case. Among all objects OBJ in the information processing system 10 including the object manager OM, the same effect as that of the above-mentioned embodiment can be also obtained, by executing the communication procedure among the respective objects by transmission of the message MSG and the reply RPL.

Besides, in the above embodiment, the description has been given of the case where the objects OBJ1 and OBJ2 of process object have been generated and executed, however we do not intend to limit the present invention to such a case, and objects which are related to the user program may be generated, thereby the process from analysis of the information processing system to program development and execution of the user program can be modeled consistently.

### Industrial Applicability

The information processing system and the information processing method can be utilized for the case of processing information on the process from the program development to execution of the program, etc.

### Explanation of Reference Numerals

1...operating system, 4, 12...memory, 10...information processing system, 11...CPU, OBJ...object, MSG...message, OM...object manager, MNT...message table, MMT...message method table, CMB...class management block, OMB...object management block

## Claims

1. An information processing system for controlling the processing functions which are the executable units of the information processing and executing the stated said information processing, said system comprising
an object manager for allocating process areas of said processing functions in storage means, for generating objects having data areas corresponding to said process areas of said processing functions within an independent area in said storage means as said executable units of said information processing when necessary, and for controlling information interchanging among said plural objects by means of interfaces having the stated procedure which is common to said objects so as to execute each of said objects.

2. The information processing system according to claim 1, wherein
said object manager is said object.

3. The information processing system according to claim 1, wherein
said object manager defines a class which is a type of said object, and generates said object within said storage means when necessary, on the basis of said class.

4. The information processing system according to claim 3, wherein
said class has class information for ensuring said process area and said data area.

5. The information processing system according to claim 3, wherein
said class shares said process area with said object.

6. The information processing system according to claim 3, wherein
said class defines a specialized class of said class when necessary, on the basis of said class generalized.

7. The information processing system according to claim 3, wherein
said object manager defines said class on the basis of the class information related to said class to store said class information in a class management block, and besides ensures a stack area and an internal variable area with respect to said object as said data area to store object information in an object management block.

8. The information processing system according to claim 1, wherein
said object manager transfers the control to a method of the second said object by means of the first said interface to be sent from the first said object, and hereby executes said second object.

9. The information processing system according to claim 1, wherein
said object has at least one method which corresponds to said interface.

10. An information processing method of controlling processing functions which are the executable units of information processing and executing a stated said information processing, said method comprising:
an object generating step of allocating process areas of said processing functions in a storage areas, and generating objects having data areas corresponding to said process areas within an independent area in said storage area as the executable units of said information processing when necessary; and
an object executing step of performing information interchanging by means of the interfaces having a stated procedure which is common to the generated plural said objects, and executing said objects.

11. The information processing method according to claim 10, wherein
said object generating step defines a class which is a type of said object, and generates said object within said storage area when necessary, on the basis of said class.

12. The information processing method according to claim 11, wherein
said object generating step ensures said process area and said data area on the basis of said class.

13. The information processing method according to claim 11, wherein
said class shares said process area with said object.

14. The information processing method according to claim 11, wherein
said object generating step defines a specialized class of said class when necessary, on the basis of a generalized class of said class.

15. The information processing method according to claim 11, wherein
said object generating step comprising:
a class information generating step of defining said class on the basis of the class information related to said class, and storing said class information in a class management block; and
an object information generating step of ensuring a stack area and an internal variable area with respect to said object as said data area, and storing object information in an object management block.

16. The information processing method according to claim 10, wherein
said object executing step comprising
a method executing step of transferring the control to a method of second said object by transmission of a message by said interface to be sent from first said object to execute said second object.

17. The information processing method according to claim 16, wherein
said object executing step comprising
a message and reply sending step of causing said first object which has sent said message to go to a block state, and then causing said second object which has executed said method to send a reply to said first object by means of said interface, and then releasing said block state of said first object in response to reply information from said method against said message.

18. The information processing method according to claim 16, wherein
said object executing step executes the plural said objects which have received said message and transferred the control to said method, in accordance with the priorities of the objects.

19. The information processing method according to claim 10, wherein
said object executes at least one method in response to said interface.
